(19) Europäisches Patentamt
European Patent Office
Office européen des brevets

(11) **EP 1 934 662 B1**

(12) **FASCICULE DE BREVET EUROPEEN**

(45) Date de publication et mention
de la délivrance du brevet:
**09.06.2010   Bulletin 2010/23**

(51) Int Cl.:
***G05D 1/06*** *(2006.01)*     ***B64C 13/16*** *(2006.01)*

(21) Numéro de dépôt: **06820164.9**

(22) Date de dépôt: **09.10.2006**

(86) Numéro de dépôt international:
**PCT/FR2006/002256**

(87) Numéro de publication internationale:
**WO 2007/042652 (19.04.2007 Gazette 2007/16)**

(54) **PROCEDE ET DISPOSITIF POUR ATTENUER SUR UN AERONEF LES EFFETS D'UNE TURBULENCE VERTICALE**

VERFAHREN UND VORRICHTUNG ZUR ABSCHWÄCHUNG DER WIRKUNGEN VERTIKALER TURBULENZEN BEI EINEM FLUGZEUG

METHOD AND DEVICE FOR ATTENUATING ON AN AIRCRAFT THE EFFECTS OF A VERTICAL TURBULENCE

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **11.10.2005   FR 0510341**

(43) Date de publication de la demande:
**25.06.2008   Bulletin 2008/26**

(73) Titulaire: **AIRBUS OPERATIONS (SAS)**
**31060 Toulouse (FR)**

(72) Inventeurs:
• **COLOMER, Alexandre**
**F-31200 Toulouse (FR)**
• **DEL SANTO, Xavier**
**F-31000 Toulouse (FR)**

(74) Mandataire: **Hauer, Bernard**
**Bloch & Bonnétat**
**23bis, rue de Turin**
**75008 Paris (FR)**

(56) Documents cités:
**EP-A- 1 018 641     FR-A- 2 756 644**
**US-A- 2 958 483     US-A- 4 227 662**
**US-A- 4 591 113**

## Description

La présente invention concerne un procédé et un dispositif pour atténuer sur un aéronef les effets d'au moins une turbulence verticale rencontrée par cet aéronef au cours d'un vol.

On sait qu'au cours d'un vol des turbulences violentes liées à des rafales de vent vertical peuvent causer au niveau de l'aéronef :

- d'importantes variations de facteur de charge vertical susceptibles de provoquer des blessures aux passagers de l'aéronef ;
- une déviation importante de l'aéronef en altitude, ce qui augmente le risque de collision avec un autre aéronef ; et
- des pics de portance sur la voilure, qui éprouvent les limites de charge de cette dernière.

Ces turbulences violentes peuvent apparaître en ciel clair et demeurent imprévisibles. Souvent, ces phénomènes qui sont localisés surprennent à la fois l'équipage de l'aéronef et les systèmes de pilotage embarqués, qui n'ont pas le temps d'effectuer les manoeuvres adéquates pour en atténuer les effets qui en résultent au niveau de l'aéronef.

On notera que, pour un avion de transport, l'apparition de facteurs de charge verticaux négatifs est très dangereuse pour les passagers qui ne sont pas fermement attachés. Ils peuvent en effet être projetés au plafond et risquent des blessures graves.

Les problèmes précités sont accentués par la diversité des profils de turbulence verticale possibles.

Le document US 4,227,662 décrit un procédé et un dispositif pour atténuer les effets d'une turbulence verticale selon les préambules des revendications 1 et 10 respectivement.

La présente invention a pour objet de remédier à ces inconvénients. Elle concerne un procédé tel que revendiqué dans la revendication 1 ainsi qu'un dispositif tel que revendiqué dans la revendication 10, permettant d'atténuer, de façon particulièrement efficace, sur un aéronef, en particulier un avion de transport, les effets d'au moins une turbulence verticale rencontrée par cet aéronef au cours d'un vol.

A cet effet, selon l'invention, ledit procédé est remarquable en ce que l'on réalise au cours du vol, de façon automatique et itérative, la suite d'étapes successives suivante :

a) on détermine une composante verticale du vent existant à l'extérieur de l'aéronef à une position courante dudit aéronef ;

b) à l'aide de cette composante verticale du vent, on détermine un niveau de sévérité concernant une turbulence verticale existant à l'extérieur de l'aéronef à ladite position courante ;

c) à l'aide de ladite composante verticale du vent, on calcule au moins un ordre de commande pour au moins un organe mobile commandable qui est susceptible d'agir sur la portance de l'aéronef, ledit ordre de commande étant tel qu'il permet de minimiser l'amplitude des facteurs de charge engendrés sur l'aéronef par la turbulence verticale ; et

d) on vérifie si des conditions d'activation dépendant au moins dudit niveau de sévérité sont réalisées ; et

e) si lesdites conditions d'activation sont réalisées, on transmet ledit ordre de commande à au moins un actionneur dudit organe mobile commandable.

Ainsi, grâce à l'invention, on détermine un niveau de sévérité de la turbulence verticale pour savoir s'il est nécessaire de mettre en oeuvre des actions d'atténuation des effets de la turbulence verticale. Lorsque de telles actions sont nécessaires, on agit (par l'intermédiaire dudit organe mobile) sur la portance totale de l'aéronef, ce qui permet de minimiser l'amplitude du facteur de charge vertical en tout point de la cabine de l'aéronef. La présente invention permet ainsi de combattre les brutales variations de facteur de charge vertical, engendrées par des turbulences verticales violentes du type précité.

De façon avantageuse, pour déterminer la composante verticale du vent :

a1) on mesure les valeurs effectives d'une pluralité de paramètres de l'aéronef à ladite position courante ; et

a2) on calcule ladite composante verticale du vent, en tenant compte desdites valeurs effectives mesurées.

Dans ce cas, avantageusement, pour un avion :

- à l'étape a1), on mesure :

  ■ à l'aide d'une centrale inertielle, la vitesse verticale $Vz$ de l'avion par rapport au sol, l'angle $\phi$ d'inclinaison des ailes de l'avion par rapport à l'horizontale, l'assiette $\theta$ de l'avion par rapport à l'horizontale, et sa vitesse de tangage $q$ ;
  ■ à l'aide d'une sonde anémométrique, la vitesse $Vtas$ de l'avion par rapport à la masse d'air dans laquelle évolue cet avion ;
■ à l'aide d'une sonde d'incidence, l'angle d'incidence α de l'avion ;
et
■ à l'aide d'une sonde de dérapage, l'angle de dérapage de l'avion ;
et

- à l'étape a2), on calcule la composante verticale Wz du vent, à l'aide de l'expression suivante :

$$Wz = Vz + Vtas.(\cos\phi.\cos\theta.\cos\beta.\sin\,[\alpha + (q.\ell/Vtas)]$$

$$- \sin\theta.\cos\beta.\cos\,[\alpha + (q.\ell/Vtas)] + \sin\beta.\cos\theta.\sin\phi)$$

dans laquelle $\ell$ représente la distance algébrique entre la sonde d'incidence et le centre de gravité de l'avion.

Par ailleurs, de façon avantageuse, on détermine le niveau de sévérité de la turbulence verticale, en fonction de l'écart en facteur de charge vertical entre un facteur de charge à l'équilibre pour l'aéronef et un facteur de charge résultant de la turbulence verticale.

Dans ce cas, de préférence, ledit niveau de sévérité correspond :

- à un premier niveau, lorsque ledit écart en facteur de charge vertical est inférieur ou égal à une première valeur prédéterminée ;
- à un deuxième niveau, lorsque ledit écart en facteur de charge vertical est supérieur à ladite première valeur prédéterminée et inférieur à une seconde valeur prédéterminée ; et
- à un troisième niveau, lorsque ledit écart en facteur de charge vertical est supérieur ou égal à ladite seconde valeur prédéterminée.

Dans une première variante de réalisation, on détermine ledit niveau de sévérité de la turbulence verticale à partir de deux combinaisons linéaires de la composante verticale du vent et de sa dérivée, et, dans une seconde variante de réalisation, on détermine ledit niveau de sévérité à partir du calcul de deux probabilités.

Par ailleurs, dans un mode de réalisation particulier :

- on calcule ledit ordre de commande à partir d'une combinaison linéaire de la composante verticale du vent et de sa dérivée ; et/ou
- lesdites conditions d'activation dépendent à la fois du niveau de sévérité de la turbulence verticale et de l'écart entre la valeur dudit ordre de commande et une valeur de seuil prédéterminée.

Dans un mode de réalisation particulier, pour un avion, on transmet l'ordre de commande à au moins l'un des organes mobiles suivants de l'avion : un spoiler et un aileron, et on détermine (et transmet à une gouverne de profondeur de l'avion) au moins un ordre de commande auxiliaire destiné à compenser le moment de tangage engendré par la commande dudit organe mobile.

La présente invention concerne également un dispositif pour atténuer sur un aéronef les effets d'au moins une turbulence verticale rencontrée par cet aéronef, par exemple un avion de transport, au cours d'un vol.

Selon, l'invention, ledit dispositif est remarquable en ce qu'il comporte :

- au moins un organe mobile commandable qui est susceptible d'agir sur la portance de l'aéronef ;
- des premiers moyens pour déterminer une composante verticale du vent existant à l'extérieur de l'aéronef à une position courante dudit aéronef ;
- des deuxièmes moyens pour déterminer automatiquement, à l'aide de cette composante verticale du vent, un niveau de sévérité concernant une turbulence verticale existant à l'extérieur de l'aéronef à ladite position courante ;
- des troisièmes moyens pour calculer automatiquement, à l'aide de ladite composante verticale du vent, au moins un ordre de commande pour ledit organe mobile commandable, ledit ordre de commande étant tel qu'il permet de minimiser l'amplitude des facteurs de charge engendrés sur l'aéronef par la turbulence verticale ; et
- des quatrièmes moyens pour vérifier automatiquement si des conditions d'activation dépendant au moins dudit niveau de sévérité sont réalisées, et pour transmettre automatiquement ledit ordre de commande à au moins un actionneur dudit organe mobile commandable, lorsque lesdites conditions d'activation sont réalisées.

Le dispositif conforme à la présente invention permet donc d'atténuer l'amplitude du facteur de charge vertical engendré par une turbulence verticale, et ceci en tout point de l'aéronef. Il permet également de réduire d'éventuelles variations d'attitude.

De plus, ce dispositif conforme à l'invention présente l'avantage de pouvoir être implanté sur tout type d'aéronef (militaire, civil, commercial) muni d'au moins un organe mobile (spoiler, aileron, ...) de type quelconque ayant un effet sur la portance.

Dans un mode de réalisation particulier, lesdits premiers moyens comportent :

- un ensemble d'éléments de mesure pour mesurer automatiquement les valeurs effectives d'une pluralité de paramètres de l'aéronef à ladite position courante ; et
- un moyen de calcul pour calculer automatiquement ladite composante verticale du vent, en tenant compte desdites valeurs effectives mesurées.

De préférence, ledit ensemble d'éléments de mesure comporte au moins une centrale inertielle, au moins une sonde anémométrique et au moins une sonde d'incidence, ainsi qu'éventuellement au moins une sonde de dérapage. L'utilisation d'une sonde de dérapage permet d'augmenter la précision de la composante verticale du vent. Généralement, les éléments de mesure précédents existent déjà sur l'aéronef, ce qui permet notamment de réduire le coût du dispositif conforme à l'invention.

Pour réduire davantage encore le coût dudit dispositif, avantageusement, lesdits deuxièmes et troisièmes moyens, ainsi que ledit moyen de calcul, font partie d'un système de pilotage automatique de l'aéronef.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 montre schématiquement un exemple de réalisation particulier d'un dispositif conforme à l'invention.

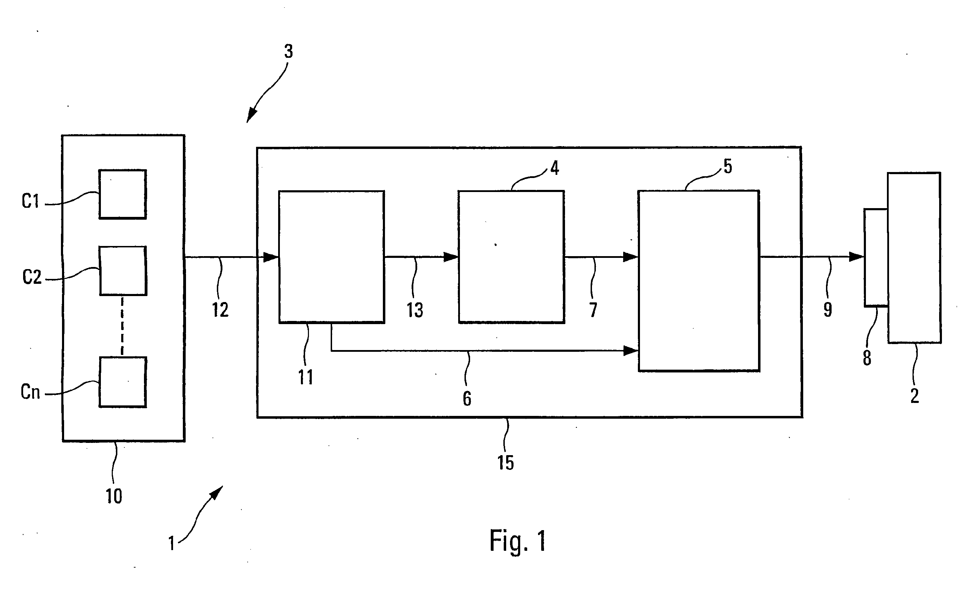

Le dispositif 1 conforme à l'invention et représenté schématiquement sur la figure 1, est destiné à atténuer sur un aéronef non représenté, par exemple un avion de transport, les effets d'au moins une turbulence verticale rencontrée par cet aéronef au cours d'un vol. On sait qu'une turbulence correspond à une agitation de l'air qui se superpose au mouvement moyen de l'air et qui est constituée par des mouvements désordonnés, en continuelle transformation. Une turbulence se rencontre à l'intérieur ou au voisinage des nuages (par exemple dans un nuage orageux où coexistent des courants verticaux de sens contraires). Il existe également des turbulences en ciel clair, soit près du sol, soit surtout à très haute altitude à proximité de courants jets.

Selon l'invention, ledit dispositif 1 comporte :

- au moins un organe mobile 2 qui est commandable et qui est susceptible d'agir sur la portance de l'aéronef ;
- des moyens 3 précisés ci-dessous, pour déterminer une composante verticale Wz du vent qui existe à l'extérieur de l'aéronef à la position courante de ce dernier ;
- des moyens 4 pour déterminer automatiquement, à l'aide de la composante verticale Wz du vent reçue desdits moyens 3, un niveau de sévérité permettant de caractériser la turbulence verticale existant à l'extérieur de l'aéronef à ladite disposition courante ; et
- des moyens 5 pour, successivement :

    ■ calculer automatiquement, à l'aide de la composante verticale Wz du vent reçue par l'intermédiaire d'une liaison 6, un ordre de commande pour ledit organe mobile 2 commandable. Cet ordre de commande est tel qu'il permet de minimiser l'amplitude des facteurs de charge qui sont engendrés sur l'aéronef par la turbulence verticale, comme précisé ci-dessous ;
    ■ vérifier automatiquement si des conditions d'activation (qui dépendent au moins dudit niveau de sévérité reçues par l'intermédiaire d'une liaison 7 desdits moyens 4) sont réalisées ; et
    ■ transmettre automatiquement ledit ordre de commande calculé à un actionneur usuel 8 dudit organe mobile 2 commandable, par l'intermédiaire d'une liaison 9, lorsque lesdites conditions d'activation sont réalisées et uniquement dans ce cas.

Ainsi, le dispositif 1 conforme à l'invention détermine un niveau de sévérité de la turbulence verticale, pour savoir s'il est nécessaire de mettre en oeuvre des actions d'atténuation des effets de la turbulence verticale. Lorsque de telles actions sont nécessaires, ledit dispositif 1 agit (par l'intermédiaire dudit organe mobile 2) sur la portance totale de l'aéronef, ce qui permet de minimiser l'amplitude du facteur de charge vertical de l'aéronef, et ceci en tout point de sa cabine. Le dispositif 1 conforme à la présente invention permet ainsi de combattre notamment les variations de facteur de charge vertical, qui sont engendrées par des turbulences verticales violentes et qui sont généralement particulièrement brutales.

Dans un mode de réalisation préféré, lesdits moyens 3 destinés à déterminer la composante verticale Wz du vent, comportent :

- une unité de mesure 10 précisée ci-dessous, pour mesurer la valeur effective d'une pluralité de paramètres de l'aéronef à ladite position courante ; et
- un moyen de calcul 11 qui est relié par l'intermédiaire d'une liaison 12 à ladite unité de mesure 10 et qui est formé de manière à calculer ladite composante verticale Wz du vent, en tenant compte des valeurs effectives mesurées par ladite unité de mesure 10.

A cet effet, ladite unité de mesure 10 comporte une pluralité d'éléments de mesure ou capteurs C1, C2, ..., Cn destinés à mesurer les valeurs effectives desdits paramètres précités de l'aéronef.

Ledit moyen de calcul 11 est relié par l'intermédiaire d'une liaison 13 auxdits moyens 4 et, par l'intermédiaire de la liaison 6, auxdits moyens 5.

Dans un mode de réalisation particulier, lesdits moyens 4 et 5 et ledit moyen de calcul 11 sont intégrés dans une unité centrale 15 qui fait par exemple partie d'un système de pilotage automatique usuel de l'aéronef. Comme un tel système de pilotage automatique existe en général déjà sur l'aéronef, ce mode de réalisation particulier permet de réduire le coût du dispositif 1 conforme à l'invention et de simplifier sa réalisation.

Dans un mode de réalisation particulier, lesdits moyens 5 déterminent le niveau de sévérité de la turbulence verticale, en fonction de l'écart en facteur de charge vertical entre un facteur de charge existant à l'équilibre sur l'aéronef et un facteur de charge existant en réponse à la turbulence verticale.

Dans ce cas, le niveau de sévérité correspond :

- à un premier niveau (appelé par exemple niveau 0), lorsque ledit écart en facteur de charge vertical est inférieur ou égal à une première valeur prédéterminée, par exemple 0,3 g, g correspondant à la valeur de l'accélération créée à la surface de la terre par la force gravitationnelle ;
- à un deuxième niveau (appelé par exemple niveau 1), lorsque ledit écart en facteur de charge vertical est supérieur à ladite première valeur prédéterminée (0,3 g par exemple) et est inférieur à une seconde valeur prédéterminée, par exemple 0,5 g ; et
- à un troisième niveau (appelé par exemple niveau 2), lorsque ledit écart en facteur de charge vertical est supérieur ou égal à ladite seconde valeur prédéterminée (0,5 g par exemple).

Dans une première variante de réalisation, lesdits moyens 4 déterminent ledit niveau de sévérité de la turbulence verticale à partir de deux combinaisons linéaires de la composante verticale Wz du vent et de sa dérivée. Les coefficients d'une telle combinaison linéaire sont optimisés de sorte que les niveaux soient reconnus au mieux par l'algorithme. Si l'une de ces combinaisons dépasse un premier seuil prédéterminé, on obtient le niveau 1, et si l'autre dépasse un second seuil prédéterminé, on obtient le niveau 2. Le niveau 2 est prioritaire sur le niveau 1.

En outre, dans une seconde variante de réalisation, lesdits moyens 4 déterminent ledit niveau de sévérité à partir du calcul de deux probabilités, à savoir d'une part la probabilité de subir des écarts de facteur de charge vertical (dans une durée prédéterminée à venir, par exemple dans une seconde) de plus d'une première valeur prédéterminée, par exemple de plus de 0,3 g, et d'autre part la probabilité de subir des écarts de facteur de charge vertical (pendant cette durée prédéterminée à venir) de plus d'une deuxième valeur prédéterminée, par exemple de plus de 0,5 g. Ces deux probabilités sont calculées à partir de la composante verticale Wz du vent reçue des moyens 3, de l'angle d'incidence $\alpha$ de l'aéronef et de la vitesse de tangage $q$ de l'aéronef. Si la probabilité associée aux écarts de 0,3 g dépasse un seuil prédéterminé, on obtient le niveau 1. Si la probabilité associée aux écarts de 0,5 g dépasse un autre seuil prédéterminé, on obtient le niveau 2. Les formules de probabilité sont données à partir de l'apprentissage de réseaux de neurones. Le niveau 2 est prioritaire sur le niveau 1.

En outre, dans un mode de réalisation particulier, lesdits moyens 5 calculent ledit ordre de commande pour l'organe mobile 2, à partir d'une combinaison linéaire de la composante verticale Wz du vent et de sa dérivée.

En outre, lesdites conditions d'activation prises en compte par les moyens 5 dépendent du niveau de sévérité de la turbulence verticale, reçu desdits moyens 4 par l'intermédiaire de la liaison 7, ainsi que de la valeur dudit ordre de commande, qui est comparée à une valeur de seuil. Pour que le système soit activé (c'est-à-dire que les conditions d'activation soient réalisées), il faut que, dans l'exemple précité, le niveau de sévérité soit au moins au niveau 1 et l'ordre de commande dépasse une valeur de seuil prédéterminée. Ensuite, si l'ordre de commande reste inférieur à une valeur prédéterminée, durant un temps prédéterminé, sans apparition du niveau 2, l'ordre de commande est annulé. L'ordre de commande est également annulé si le niveau de sévérité passe du niveau 2 au niveau 1, avec une dérivée de l'incidence qui est négative.

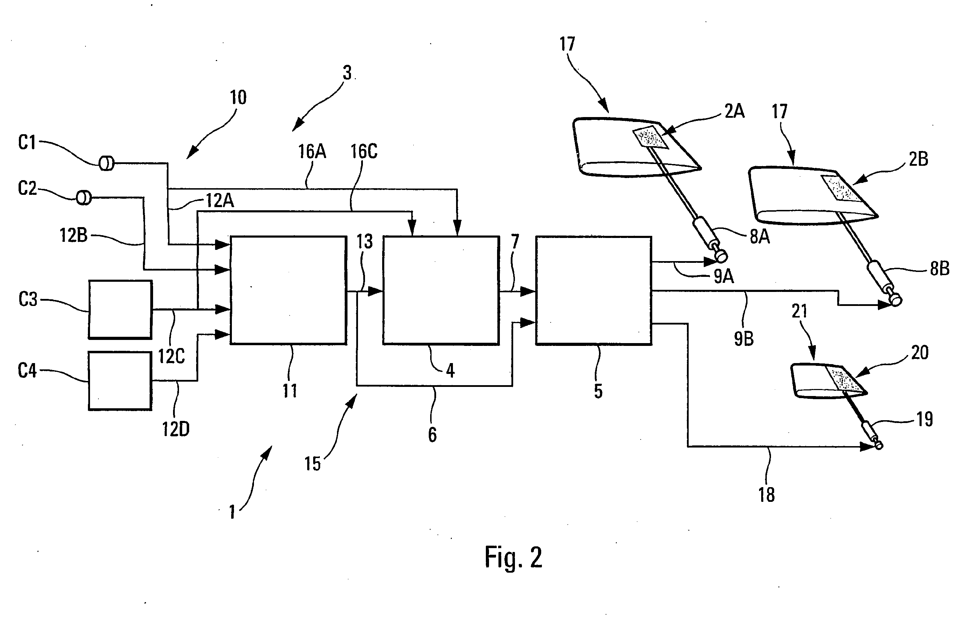

Dans un mode de réalisation préféré représenté sur la figure 2, qui est appliqué à un avion, ladite unité de mesure 10 comporte comme capteurs C1, C2, C3 et C4 qui sont reliés respectivement par l'intermédiaire de liaisons 12A, 12B, 12C et 12D audit moyen de calcul 11 :

-   une sonde d'incidence C1 usuelle, pour mesurer l'angle d'incidence $\alpha$ de l'avion ;
-   une sonde de dérapage C2 usuelle, pour mesurer l'angle de dérapage de l'avion ;
-   une centrale inertielle C3 usuelle, pour mesurer la vitesse verticale Vz de l'avion par rapport au sol, l'angle $\phi$ d'inclinaison des ailes de l'avion par rapport à l'horizontale, l'assiette $\theta$ de l'avion par rapport à l'horizontale, et sa vitesse de tangage q ; et
-   une sonde anémométrique C4 usuelle, pour mesurer la vitesse Vtas de l'avion par rapport à la masse d'air dans laquelle évolue cet avion.

Dans cet exemple, le moyen de calcul 11 calcule la composante verticale Wz du vent, à l'aide de l'expression suivante :

$$Wz = Vz + Vtas.(\cos\phi.\cos\theta.\cos\beta.\sin\ [\alpha + (q.\ell/Vtas)]$$

$$- \sin\theta.\cos\beta.\cos\ [\alpha + (q.\ell/Vtas)] + \sin\beta.\cos\theta.\sin\phi)$$

dans laquelle $\ell$ représente la distance algébrique entre la sonde d'incidence C1 et le centre de gravité de l'avion.
De plus, dans cet exemple de la figure 2, la sonde d'incidence C1 est reliée par l'intermédiaire d'une liaison 16A aux moyens 4 pour leur fournir l'angle d'incidence $\alpha$, et la centrale inertielle C3 est reliée par l'intermédiaire d'une liaison 16C auxdits moyens 4 pour leur fournir la vitesse de tangage q. Cet angle d'incidence $\alpha$ et cette vitesse de tangage q peuvent être utilisés par les moyens 4 pour déterminer le niveau de sévérité de la turbulence verticale, conformément à la seconde variante de réalisation précitée.
En outre, dans l'exemple de la figure 2, le dispositif 1 conforme à l'invention comporte comme organe mobile :

-   au moins un spoiler 2A usuel, qui est monté sur une aile 17 de l'avion et qui est associé à un moyen d'actionnement usuel 8A relié par l'intermédiaire d'une liaison 9A auxdits moyens 5 ; et
-   au moins un aileron 2B usuel, qui est également monté sur une aile 17 et qui est associé à un actionneur usuel 8B relié par l'intermédiaire d'une liaison 9B auxdits moyens 5.

Comme indiqué précédemment, les ordres de commande pour le ou les spoilers 2A et le ou les ailerons 2B sont obtenus à partir d'une combinaison linéaire de la composante verticale Wz du vent et de sa dérivée.
En outre, dans un mode de réalisation particulier, lesdits moyens 5 déterminent de plus un ordre de commande auxiliaire, et ils transmettent cet ordre de commande auxiliaire, par l'intermédiaire d'une liaison 18, à un actionneur usuel 19 d'une gouverne de profondeur usuelle 20 qui est montée sur un empennage horizontal 21 de l'avion. Cet ordre de commande auxiliaire est destiné à compenser le moment de tangage qui est engendré par la commande (conforme à l'invention) du ou des spoilers 2A et du ou des ailerons 2B. Ledit ordre de commande auxiliaire est proportionnel aux ordres de commande du ou des spoilers 2A et du ou des ailerons 2B, selon un gain calculé à partir du cas de vol (masse, centrale, vitesse et altitude de l'avion). Les différents ordres sont mis en phase. La mise en phase consiste à rendre égaux le temps nécessaire à chaque élément mobile (organe mobile 2A, 2B ; gouverne de profondeur 20) pour atteindre la valeur de consigne. Ce temps est choisi comme celui de l'élément mobile (organe mobile 2A, 2B ; gouverne de profondeur 20) le plus lent.
Bien entendu, les ordres de commande déterminés conformément à la présente invention sont superposés aux ordres fournis de façon usuelle par d'autres organes de pilotage de l'aéronef, avant d'être transmis aux actionneurs 8A, 8B, 19 des éléments mobiles (organe mobile 2A, 2B ; gouverne de profondeur 20). Ainsi, le dispositif 1 conforme à l'invention s'applique aussi bien à un système de commande de vol manuel d'aéronef qu'à un système de commande de vol automatique d'aéronef.
Le dispositif 1 conforme à la présente invention permet donc d'atténuer l'amplitude du facteur de charge vertical engendré par une turbulence verticale, et ceci en tout point de l'aéronef. Il permet également de réduire d'éventuelles variations d'altitude.
De plus, ce dispositif 1 conforme à l'invention présente l'avantage de pouvoir être implanté sur tout type d'aéronef (militaire, civil, commercial) muni d'au moins un organe mobile de type quelconque (spoiler 2A, aileron 2B) ayant un effet sur la portance de l'aéronef.
Dans le cadre de la présente invention, le mode de calcul précité de la composante verticale Wz du vent peut être complété ou remplacé par une sonde spécifique ou par des informations extérieures aux systèmes de l'aéronef, par exemple des communications de relevés météorologiques reçues depuis le sol ou d'un autre aéronef.

**Revendications**

1. Procédé pour atténuer sur un aéronef les-effets d'au moins une turbulence verticale rencontrée par cet aéronef au cours d'un vol, procédé selon lequel on réalise au cours du vol, de façon automatique, la suite d'étapes successives suivante :

   a) on détermine une composante verticale du vent existant à l'extérieur de l'aéronef à une position courante dudit aéronef ;
   c) à l'aide de ladite composante verticale du vent, on calcule au moins un ordre de commande pour au moins un organe mobile commandable (2, 2A, 2B) qui est susceptible d'agir sur la portance de l'aéronef, ledit ordre de commande étant tel qu'il permet de minimiser l'amplitude des facteurs de charge engendrés sur l'aéronef par la turbulence verticale ; et
   e) on transmet ledit ordre de commande à au moins un actionneur (8, 8A, 8B) dudit organe mobile commandable (2, 2A, 2B),
   **caractérisé en ce que** :

   - on réalise de plus au cours dudit vol, de façon automatique, les étapes suivantes :

     b) à l'aide de ladite composante verticale du vent, on détermine un niveau de sévérité concernant une turbulence verticale existant à l'extérieur de l'aéronef à ladite position courante, ledit niveau de sévérité de la turbulence verticale étant déterminé en fonction de l'écart en facteur de charge vertical entre un facteur de charge à l'équilibre pour l'aéronef et un facteur de charge résultant de la turbulence-verticale ; et
     d) on vérifie si des conditions d'activation dépendant au moins dudit niveau de-sévérité sont réalisées ; et

   - à l'étape e), on transmet ledit ordre de commande audit actionneur (8, 8A, 8B) dudit organe mobile commandable (2, 2A, 2B) lorsque lesdites conditions d'activation sont réalisées.

2. Procédé selon-la revendication 1,
   **caractérisé en ce que**, pour déterminer la composante verticale du vent :

   a1) on mesure les valeurs effectives d'une pluralité de paramètres de l'aéronef à ladite position courante ; et
   a2) on calcule ladite composante verticale du vent, en tenant compte desdites valeurs effectives mesurées.

3. Procédé selon la revendication 2,
   **caractérisé en ce que**, pour un avion :

   - à l'étape a1), on mesure :

     . à l'aide d'une centrale inertielle (C3), la vitesse verticale Vz de l'avion par rapport au sol, l'angle $\phi$ d'inclinaison des ailes de l'avion par rapport à l'horizontale, l'assiette $\theta$ de l'avion par rapport à l'horizontale, et sa vitesse de tangage $\underline{q}$ ;
     . à l'aide d'une sonde anémométrique (C4), la vitesse Vtas de l'avion par rapport à la masse d'air dans laquelle évolue cet avion ;
     . à l'aide d'une sonde d'incidence (C1), l'angle d'incidence $\alpha$ de l'avion ; et
     . à l'aide d'une sonde de dérapage (C2), l'angle de dérapage $\beta$ de l'avion; et

   - à l'étape a2), on calcule la composante verticale Wz du vent, à l'aide de l'expression suivante :

$$Wz = Vz + Vtas.(\cos\phi.\cos\theta.\cos\beta.\sin\ [\alpha + (q.\ell/Vtas)]$$

$$- \sin\theta.\cos\beta.\cos\ [\alpha + (q.\ell/Vtas)] + \sin\beta.\cos\theta.\sin\phi)$$

dans laquelle $\ell$ représente la distance algébrique entre la sonde d'incidence (C1) et le centre de gravité de l'avion.

4. Procédé selon l'une quelconque des revendications 1 à 3, **caractérisé en ce que** ledit niveau de sévérité correspond :

   - à un premier niveau, lorsque ledit écart en facteur de charge vertical est inférieur ou égal à une première valeur prédéterminée ;
   - à un deuxième niveau, lorsque ledit écart en facteur de charge vertical est supérieur à ladite première valeur prédéterminée et inférieur à une seconde valeur prédéterminée ; et
   - à un troisième niveau, lorsque ledit écart en facteur de charge vertical est supérieur ou égal à ladite seconde valeur prédéterminée.

5. Procédé selon l'une quelconque des revendications 1 à 4, **caractérisé en ce qu'**à l'étape b), on détermine le niveau de sévérité de la turbulence verticale à partir de deux combinaisons linéaires de la composante verticale du vent et de sa dérivée.

6. Procédé selon l'une quelconque des revendications 1 à 4, **caractérisé en ce qu'**à l'étape b), on détermine le niveau de sévérité de la turbulence verticale à partir du calcul de deux probabilités.

7. Procédé selon l'une quelconque des revendications précédentes, **caractérisé en ce qu'**à l'étape c), on calcule ledit ordre de commande à partir d'une combinaison linéaire de la composante verticale du vent et de sa dérivée.

8. Procédé selon l'une quelconque des revendications précédentes, **caractérisé en ce qu'**à l'étape d), lesdites conditions d'activation dépendent du niveau de sévérité de la turbulence verticale et de l'écart entre la valeur dudit ordre de commande et une valeur de seuil prédéterminée.

9. Procédé selon-l'une quelconque des revendications précédentes, **caractérisé en ce que**, pour un avion, à l'étape d), on transmet l'ordre de commande à au moins l'un des organes mobiles suivants de l'avion : un spoiler (2A) et un aileron (2B), et on détermine et transmet à une gouverne de profondeur (20) de l'avion au moins un ordre de commande auxiliaire destiné à compenser le moment de tangage engendré par la commande dudit organe mobile (2A, 2B).

10. Dispositif pour atténuer sur un aéronef les effets d'au moins une turbulence verticale rencontrée par cet aéronef au cours d'un vol, ledit dispositif (1) comportant :

    - au moins un organe mobile commandable (2, 2A, 2B) qui est susceptible d'agir sur la portance de l'aéronef ;
    - des premiers moyens (3) pour déterminer une composante verticale du vent existant à l'extérieur de l'aéronef à une position courante dudit aéronef ;
    - des troisièmes moyens (5) pour calculer automatiquement, à l'aide de ladite composante verticale du vent, au moins un ordre de commande pour ledit-organe mobile-commandable (2, 2A, 2B), ledit ordre de commande étant tel qu'il permet de minimiser l'amplitude des facteurs de charge engendrés sur l'aéronef par la turbulence verticale ; et
    - des quatrièmes moyens (5) pour transmettre automatiquement ledit ordre de commande à au moins un actionneur (8, 8A, 8B) dudit organe mobile commandable (2, 2A, 2B),

    **caractérisé en ce que** :

    - ledit dispositif (1) comporte, de plus, des deuxièmes moyens (4) pour déterminer automatiquement, à l'aide de ladite composante verticale du vent, un niveau de sévérité concernant une turbulence verticale existant à l'extérieur de l'aéronef à ladite position courante, lesdits deuxièmes moyens (4) déterminant ledit niveau de sévérité de la turbulence verticale, en fonction de l'écart en facteur de-charge vertical entre un facteur de charge à l'équilibre pour l'aéronef et un facteur de charge résultant de la turbulence verticale ; et
    - lesdits quatrièmes moyens (5) sont formés pour vérifier automatiquement si des conditions d'activation dépendant au moins dudit niveau de sévérité sont réalisées, et pour transmettre automatiquement ledit ordre de commande audit actionneur (8, 8A, 8B) dudit organe mobile commandable (2, 2A, 2B), lorsque lesdites conditions d'activation sont réalisées.

11. Dispositif selon la revendication 10,

**caractérisé en ce que** lesdits premiers moyens (3) comportent :

- un ensemble (10) d'éléments de mesure (C1, C2, C3, C4, Cn) pour mesurer automatiquement les valeurs effectives d'une pluralité de paramètres de l'aéronef à ladite position courante ; et
- un moyen de calcul (11) pour calculer automatiquement ladite composante verticale du vent, en tenant compte desdites valeurs effectives mesurées.

**12.** Dispositif selon la revendication 11,
**caractérisé en ce que** ledit ensemble (10) d'éléments de mesure comporte au moins une centrale inertielle (C3), au moins une sonde anémométrique (C4) et au moins une sonde d'incidence (C1).

**13.** Dispositif selon la revendication 12,
**caractérisé en ce que** ledit ensemble (10) d'éléments de mesure comporte, de plus, au moins-une sonde de dérapage (C2).

**14.** Dispositif selon l'une quelconque des revendications 10 à 13,
**caractérisé en ce que** lesdits deuxièmes et troisièmes moyens (4, 5), ainsi que ledit moyen de calcul (11), font partie d'un système de pilotage automatique- (15) de l'aéronef.

**15.** Dispositif selon l'une quelconque des revendications 10 à 14,
**caractérisé en ce que** ledit organe mobile est un spoiler (2A).

**16.** Dispositif selon l'une quelconque des revendications 10 à 14,
**caractérisé en ce que** ledit organe mobile est un aileron (2B).

**17.** Aéronef,
**caractérisé en ce qu'**il comporte un dispositif (1) susceptible de mettre en oeuvre le procédé spécifié sous l'une quelconque des revendications 1 à 9.

**18.** Aéronef,
**caractérisé en ce qu'**il comporte un dispositif (1) tel que celui spécifié sous l'une quelconque des revendications 10 à 16.

**Claims**

**1.** A method for attenuating on an aircraft the effects of at least one vertical turbulence encountered by this aircraft in the course of a flight, according to which method the following series of successive steps is carried out in an automatic manner in the course of the flight:

a) a vertical component of the wind existing outside the aircraft is determined at a current position of said aircraft;
c) with the aid of said vertical component of the wind, at least one control order is calculated for at least one controllable movable member (2, 2A, 2B) which is capable of acting on the lift of the aircraft, said control order being such that it makes it possible to minimize the amplitude of the load factors generated on the aircraft by the vertical turbulence; and
e) said control order is transmitted to at least one actuator (8, 8A, 8B) of said controllable movable member (2, 2A, 2B),
**characterized in that**:

- the following steps are moreover carried out in an automatic manner in the course of said flight:

b) with the aid of said vertical component of the wind, a severity level relating to a vertical turbulence existing outside the aircraft is determined at said current position, said severity level of the vertical turbulence being determined as a function of the deviation in vertical load factor between a load factor at equilibrium for the aircraft and a load factor resulting from the vertical turbulence; and
d) a check is carried out to verify whether activation conditions depending at least on said severity level are realized; and

- in step e), said control order is transmitted to said actuator (8, 8A, 8B) of said controllable movable member (2, 2A, 2B) when said activation conditions are realized.

2. The method as claimed in claim 1,
   **characterized in that**, to determine the vertical component of the wind:

   a1) the actual values of a plurality of parameters of the aircraft are measured at said current position; and
   a2) said vertical component of the wind is calculated by taking account of said measured actual values.

3. The method as claimed in claim 2, **characterized in that**, for an airplane:

   - in step a1), are measured:

     • with the aid of an inertial platform (C3), the vertical speed Vz of the airplane relative to the ground, the angle φ of inclination of the wings of the airplane relative to the horizontal, the attitude θ of the airplane relative to the horizontal, and its pitch rate q;
     • with the aid of an anemometric probe (C4), the speed Vtas of the airplane relative to the air mass in which this airplane is traveling;
     • with the aid of an incidence probe (C1), the angle of incidence α of the airplane; and
     • with the aid of a sideslip probe (C2), the angle of sideslip β of the airplane; and

   - in step a2), the vertical component Wz of the wind is calculated with the aid of the following expression:

$$Wz = Vz + Vtas.(\cos\varphi.\cos\theta.\cos\beta.\sin[\alpha+(q.\ell/Vtas)]$$
$$- \sin\theta.\cos\beta.\cos[\alpha+(q.\ell/Vtas)] +\sin\beta.\cos\theta.\sin\varphi)$$

   in which $\ell$ represents the algebraic distance between the incidence probe (C1) and the center of gravity of the airplane.

4. The method as claimed in any one of claims 1 to 3,
   **characterized in that** said severity level corresponds:

   - to a first level, when said deviation in vertical load factor is less than or equal to a first predetermined value;
   - to a second level, when said deviation in vertical load factor is greater than said first predetermined value and less than a second predetermined value; and
   - to a third level, when said deviation in vertical load factor is greater than or equal to said second predetermined value.

5. The method as claimed in any one of claims 1 to 4,
   **characterized in that** in step b), the severity level of the vertical turbulence is determined on the basis of two linear combinations of the vertical component of the wind and of its derivative.

6. The method as claimed in any one of claims 1 to 4,
   **characterized in that** in step b), the severity level of the vertical turbulence is determined on the basis of the calculation of two probabilities.

7. The method as claimed in any one of the preceding claims,
   **characterized in that** in step c), said control order is calculated on the basis of a linear combination of the vertical component of the wind and of its derivative.

8. The method as claimed in any one of the preceding claims,
   **characterized in that** in step d), said activation conditions depend on the severity level of the vertical turbulence and the deviation between the value of said control order and a predetermined threshold value.

9. The method as claimed in any one of the preceding claims,
   **characterized in that**, for an airplane, in step d), the control order is transmitted to at least one of the following movable members of the airplane: a spoiler (2A) and an aileron (2B), and at least one auxiliary control order intended to compensate the pitch moment generated by the control of said movable member (2A, 2B) is determined and transmitted to an elevator (20) of the airplane.

**10.** A device for attenuating on an aircraft the effects of at least one vertical turbulence encountered by this aircraft in the course of a flight, said device (1) comprising:

- at least one controllable movable member (2, 2A, 2B) which is capable of acting on the lift of the aircraft;
- first means (3) for determining a vertical component of the wind existing outside the aircraft at a current position of said aircraft;
- third means (5) for automatically calculating, with the aid of said vertical component of the wind, at least one control order for said controllable movable member (2, 2A, 2B), said control order being such that it makes it possible to minimize the amplitude of the load factors generated on the aircraft by the vertical turbulence; and
- fourth means (5) for automatically transmitting said control order to at least one actuator (8, 8A, 8B) of said controllable movable member (2, 2A, 2B), **characterized in that**:
- said device (1) moreover comprises second means (4) for automatically determining, with the aid of said vertical component of the wind, a severity level relating to a vertical turbulence existing outside the aircraft at said current position, said second means (4) determining said severity level of the vertical turbulence, as a function of the deviation in vertical load factor between a load factor at equilibrium for the aircraft and a load factor resulting from the vertical turbulence; and
- said fourth means (5) are formed to automatically verify whether activation conditions depending at least on said severity level are realized, and to automatically transmit said control order to said actuator (8, 8A, 8B) of said controllable movable member (2, 2A, 2B), when said activation conditions are realized.

**11.** The device as claimed in claim 10,
**characterized in that** said first means (3) comprise:

- a set (10) of measurement elements (C1, C2, C3, C4, Cn) for automatically measuring the actual values of a plurality of parameters of the aircraft at said current position; and
- a calculation means (11) for automatically calculating said vertical component of the wind, by taking account of said measured actual values.

**12.** The device as claimed in claim 11,
**characterized in that** said set (10) of measurement elements comprises at least one inertial platform (C3), at least one anemometric probe (C4) and at least one incidence probe (C1).

**13.** The device as claimed in claim 12,
**characterized in that** said set (10) of measurement elements comprises, moreover, at least one sideslip probe (C2).

**14.** The device as claimed in any one of claims 10 to 13,
**characterized in that** said second and third means (4, 5), as well as said calculation means (11), form part of an automatic piloting system (15) of the aircraft.

**15.** The device as claimed in any one of claims 10 to 14,
**characterized in that** said movable member is a spoiler (2A).

**16.** The device as claimed in any one of claims 10 to 14,
**characterized in that** said movable member is an aileron (2B).

**17.** An aircraft,
**characterized in that** it comprises a device (1) capable of implementing the method specified under any one of claims 1 to 9.

**18.** An aircraft,
**characterized in that** it comprises a device (1) such as that specified under any one of claims 10 to 16.

**Patentansprüche**

1. Verfahren zur Abschwächung der Wirkungen mindestens einer vertikalen Turbulenz auf ein Flugzeug, die von diesem Flugzeug während eines Flugs angetroffen wird, Verfahren, gemäß dem während des Flugs auf automatische Weise die folgende Reihe von aufeinander folgenden Schritten durchgeführt wird:

   a) es wird eine vertikale Komponente des Windes festgelegt, die außerhalb des Flugzeuges an einer aktuellen Position des Flugzeugs existiert;
   c) mithilfe dieser vertikalen Komponente des Windes wird mindestens ein Steuerungsbefehl für mindestens ein steuerbares bewegliches Organ (2, 2A, 2B) berechnet, das dazu in der Lage ist, auf den Auftrieb des Flugzeuges zu wirken, wobei der Steuerungsbefehl derart ist, dass er es ermöglicht, die Amplitude der Belastungsfaktoren, die auf dem Flugzeug durch die vertikale Turbulenz erzeugt werden, zu minimieren; und e) der Steuerungsbefehl wird an mindestens ein Betätigungsgerät (8, 8A, 8B) des steuerbaren beweglichen Organs (2, 2A, 2B) übertragen, **dadurch gekennzeichnet, dass**:

   - außerdem während des Flugs auf automatische Weise die folgenden Schritte durchgeführt werden:

   b) mithilfe der vertikalen Komponente des Windes wird ein Grad der Schwere einer vertikalen Turbulenz, die außerhalb des Flugzeugs an der aktuellen Position existiert, bestimmt, wobei der Grad der Schwere der vertikalen Turbulenz je nach der Abweichung des vertikalen Belastungsfaktors zwischen einem Belastungsfaktor, wenn das Flugzeug im Gleichgewicht ist, und einem Belastungsfaktor, der sich aus der vertikalen Turbulenz ergibt, bestimmt wird; und
   d) es wird überprüft, ob die Aktivierungsbedingungen, die mindestens vom Grad der Schwere abhängen, gegeben sind; und

   - bei Schritt e) wird der Steuerungsbefehl an das Betätigungsgerät (8, 8A, 8B) des steuerbaren beweglichen Organs (2, 2A, 2B) übertragen, wenn die Aktivierungsbedingungen gegeben sind.

2. Verfahren nach Anspruch 1, **dadurch gekennzeichnet, dass**, um die vertikale Komponente des Windes zu bestimmen:

   a1) die effektiven Werte einer Vielzahl von Parametern des Flugzeugs an der aktuellen Position gemessen werden; und
   a2) die vertikale Komponente des Windes berechnet wird, indem die gemessenen effektiven Werte berücksichtigt werden.

3. Verfahren nach Anspruch 2, **dadurch gekennzeichnet, dass** für ein Flugzeug:

   - in Schritt a1) Folgendes gemessen wird:

   . mithilfe eines Inertialsensors (C3) die vertikale Geschwindigkeit Vz des Flugzeugs bezüglich des Bodens, der Winkel $\phi$ der Neigung der Flügel des Flugzeugs bezüglich der Horizontale, die Trimmlage $\theta$ des Flugzeugs bezüglich der Horizontale, und seine Längsneigungsgeschwindigkeit $q$;
   . mithilfe einer Anemometersonde (C4) die Geschwindigkeit Vtas des Flugzeugs bezüglich der Luftmasse, in der sich das Flugzeug bewegt;
   . mithilfe einer Anstellwinkelsonde (C1) der Anstellwinkel $\alpha$ des Flugzeugs; und
   . mithilfe einer Abschmiersonde (C2) der Abschmierwinkel $\beta$ des Flugzeugs; und
   - in Schritt a2) die vertikale Komponente Wz des Windes mithilfe des folgenden Ausdrucks berechnet wird:

$$Wz = Vz + Vtas.(cos\phi.cos\theta.cosß.sin\,[\alpha+(q.l/Vtas)]$$

$$- sin\theta.cosß.cos\,[\alpha+(q.l/Vtas)]+sinß.cos\theta.sin\phi)$$

   wobei l den algebraischen Abstand zwischen der Anstellwinkelsonde (C1) und dem Schwerpunkt des Flugzeugs darstellt.

**4.** Verfahren nach einem der Ansprüche 1 bis 3, **dadurch gekennzeichnet, dass** der Grad der Schwere Folgendem entspricht:

- einem ersten Grad, wenn die Abweichung des Belastungsfaktors geringer oder gleich einem ersten vorbestimmten Wert ist;
- einem zweiten Grad, wenn die Abweichung des vertikalen Belastungsfaktors höher als der erste vorbestimmte Wert und niedriger als ein zweiter vorbestimmter Wert ist; und
- einem dritten Grad, wenn die Abweichung des vertikalen Belastungsfaktors höher oder gleich dem zweiten vorbestimmten Wert ist.

**5.** Verfahren nach einem der Ansprüche 1 bis 4, **dadurch gekennzeichnet, dass** in Schritt b) der Grad der Schwere der vertikalen Turbulenz auf der Grundlage von zwei linearen Kombinationen der vertikalen Komponente des Windes und seiner Ableitung bestimmt wird.

**6.** Verfahren nach einem der Ansprüche 1 bis 4, **dadurch gekennzeichnet, dass** in Schritt b) der Grad der Schwere der vertikalen Turbulenz auf der Grundlage der Berechnung der zwei Wahrscheinlichkeiten bestimmt wird.

**7.** Verfahren nach einem der vorhergehenden Ansprüche, **dadurch gekennzeichnet, dass** in Schritt c) der Steuerungsbefehl auf der Grundlage einer linearen Kombination der vertikalen Komponente des Windes und seiner Ableitung berechnet wird.

**8.** Verfahren nach einem der vorhergehenden Ansprüche, **dadurch gekennzeichnet, dass** in Schritt d) die Aktivierungsbedingungen vom Grad der Schwere der vertikalen Turbulenz und der Abweichung zwischen dem Wert des Steuerungsbefehls und einem vorherbestimmten Schwellenwert abhängt.

**9.** Verfahren nach einem der vorhergehenden Ansprüche, **dadurch gekennzeichnet, dass** bei einem Flugzeug in Schritt d) der Steuerungsbefehl an mindestens eines der folgenden beweglichen Organe des Flugzeugs übertragen wird: einen Spoiler (2A) und ein Querruder (2B), und es wird mindestens ein zusätzlicher Steuerungsbefehl, der dazu dient, das Längsneigungsmoment zu kompensieren, das von der Steuerung des beweglichen Organs (2A, 2B) erzeugt wird, Bestimmt und auf ein Höhenruder (20) übertragen.

**10.** Vorrichtung zur Abschwächung der Wirkungen mindestens einer vertikalen Turbulenz auf ein Flugzeug, die von diesem Flugzeug während eines Flugs angetroffen wird, wobei die Vorrichtung (1) Folgendes umfasst:

- mindestens ein steuerbares bewegliches Organ (2, 2A, 2B), das dazu in der Lage ist, auf den Auftrieb des Flugzeugs zu wirken;
- erste Mittel (3), um eine vertikale Komponente des Windes zu bestimmen, die außerhalb des Flugzeugs an einer aktuellen Position des Flugzeugs existiert;
- dritte Mittel (5), um automatisch mithilfe der vertikalen Komponente des Windes mindestens einen Steuerungsbefehl für das steuerbare bewegliches Organ (2, 2A, 2B) zu berechnen, wobei der Steuerungsbefehl derart ist, dass er es ermöglicht, die Amplitude der Belastungsfaktoren, die auf dem Flugzeug durch die vertikale Turbulenz erzeugt werden, zu minimieren; und
- vierte Mittel (5), um automatisch den Steuerungsbefehl an mindestens ein Betätigungsgerät (8, 8A, 8B) des steuerbaren beweglichen Organs (2, 2A, 2B) zu übertragen, **dadurch gekennzeichnet, dass**:
- die Vorrichtung (1) außerdem zweite Mittel (4) umfasst, um automatisch mithilfe der vertikalen Komponente des Windes einen Grad der Schwere bezüglich einer vertikalen Turbulenz, die außerhalb des Flugzeugs an der aktuellen Position existiert, zu bestimmen, wobei die zweiten Mittel (4) den Grad der Schwere der vertikalen Turbulenz je nach der Abweichung des vertikalen Belastungsfaktors zwischen einem Belastungsfaktor, wenn das Flugzeug im Gleichgewicht ist, und einem Belastungsfaktor, der sich aus der vertikalen Turbulenz ergibt, bestimmen; und
- die vierten Mittel (5) gebildet sind, um automatisch zu überprüfen, ob Betätigungsbedingungen, die mindestens vom Grad der Schwere abhängen, gegeben sind, und um automatisch den Steuerungsbefehl an das Betätigungsgerät (8, 8A, 8B) des steuerbaren beweglichen Organs (2, 2A, 2B) zu übertragen, wenn die Betätigungsbedingungen gegeben sind.

**11.** Vorrichtung nach Anspruch 10, **dadurch gekennzeichnet, dass** die ersten Mittel (3) Folgendes umfassen:

- eine Gruppe (10) von Messelementen (C1, C2, C3, C4, Cn), um automatisch die effektiven Werte einer Vielzahl von Parametern des Flugzeugs an der aktuellen Position zu messen; und

- ein Berechnungsmittel (11), um automatisch die vertikale Komponente des Windes zu berechnen, wobei die gemessenen effektiven Werte berücksichtigt werden.

12. Vorrichtung nach Anspruch 11, **dadurch gekennzeichnet, dass** die Gruppe (10) von Messelementen mindestens einen Inertialsensor (C3), mindestens eine Anemometersonde (C4) und mindestens eine Anstellwinkelsonde (C1) umfasst.

13. Vorrichtung nach Anspruch 12, **dadurch gekennzeichnet, dass** die Gruppe (10) von Messelementen außerdem mindestens eine Abschmiersonde (C2) umfasst.

14. Verfahren nach einem der Ansprüche 10 bis 13, **dadurch gekennzeichnet, dass** die zweiten und dritten Mittel (4, 5), ebenso wie das Berechnungsmittel (11) Teil eines Systems zur automatischen Steuerung (15) des Flugzeugs sind.

15. Verfahren nach einem der Ansprüche 10 bis 14, **dadurch gekennzeichnet, dass** das bewegliche Organ ein Spoiler (2A) ist.

16. Verfahren nach einem der Ansprüche 10 bis 14, **dadurch gekennzeichnet, dass** das bewegliche Organ ein Querruder (2B) ist.

17. Flugzeug, **dadurch gekennzeichnet, dass** es eine Vorrichtung (1) umfasst, die dazu in der Lage ist, das Verfahren, spezifiziert in einem der Ansprüche 1 bis 9, durchzuführen.

18. Flugzeug, **dadurch gekennzeichnet, dass** es eine Vorrichtung (1) umfasst wie diejenige, die in einem der Ansprüche 10 bis 16 spezifiziert ist.

Fig. 1

C1
C2
Cn

3

4

5

10

11

12

13

7

6

9

8

2

15

1

15

EP 1 934 662 B1

Fig. 2

EP 1 934 662 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4227662 A